# EUROPÄISCHE PATENTSCHRIFT

(11) **EP 0 796 350 B1**
(45) Veröffentlichungstag und Bekanntmachung des Hinweises auf die Patenterteilung: **24.05.2000**
(21) Anmeldenummer: 96933255.0
(22) Anmeldetag: 08.10.1996
(51) Int. Cl.: C21B 13/14, C21B 13/00

(54) **VERFAHREN ZUR HERSTELLUNG VON FLÜSSIGEM ROHEISEN ODER FLÜSSIGEN STAHLVORPRODUKTEN UND ANLAGE ZUR DURCHFÜHRUNG DES VERFAHRENS**
METHOD OF PRODUCING MOLTEN CRUDE IRON OR MOLTEN CRUDE STEEL, AND PLANT FOR CARRYING OUT THE METHOD
PROCEDE DE PRODUCTION DE FONTE BRUTE LIQUIDE OU D'ACIER BRUT LIQUIDE, ET INSTALLATION POUR LA MISE EN UVRE DUDIT PROCEDE

(30) Priorität: 10.10.1995 AT 168195
(43) Veröffentlichungstag der Anmeldung: 24.09.1997
(73) Patentinhaber: VOEST-ALPINE INDUSTRIEANLAGENBAU GMBH, 4020 Linz (AT); POHANG IRON & STEEL CO., LTD., Pohang City, Kyong Sang Book-Do 790-300 (KR); RESEARCH INSTITUTE OF INDUSTRIAL SCIENCE & TECHNOLOGY, INCORPORATED FOUNDATION, Pohang City, Kyong Sang Book-do 790-330 (KR)
(72) Erfinder: KEPPLINGER, Leopold Werner, 4060 Leonding (AT); WALLNER, Felix, 4020 Linz (AT); SCHENK, Johannes-Leopold, 4040 Linz (AT)
(74) Vertreter: Kopecky, Helmut, Dipl.-Ing. Kopecky & Schwarz Patentanwälte
(86) Internationale Anmeldenummer: AT9600191
(87) Internationale Veröffentlichungsnummer: WO9713880

(56) Entgegenhaltungen:
- EP-A- 0 255 180
- EP-A- 0 488 429
- EP-A- 0 571 358
- EP-A- 0 594 557
- EP-A- 0 614 990
- DE-B- 1 163 353
- US-A- 5 338 336

## Beschreibung

Die Erfindung betrifft ein Verfahren zur Herstellung von flüssigem Roheisen oder flüssigen Stahlvorprodukten, aus teilchenförmigem eisenoxidhältigem Material im Wirbelschichtverfahren, wobei das eisenoxidhältige Material mit Hilfe eines Reduktionsgases in mindestens einer Vor-Reduktionsstufe vorreduziert und anschließend in einer End-Reduktionsstufe zu Eisenschwamm reduziert wird, der Eisenschwamm in einer Einschmelzvergasungszone unter Zufuhr von Kohlenstoffträgern und sauerstoffhältigem Gas erschmolzen und ein CO- und H₂-hältiges Reduktionsgas erzeugt wird, welches in die End-Reduktionsstufe eingeleitet, dort umgesetzt, abgezogen, anschließend in mindestens eine Vor-Reduktionsstufe eingeleitet, dort umgesetzt, abgezogen, einer Wäsche unterworfen und anschließend als Exportgas abgeleitet wird und wobei zumindest ein Teil des umgesetzten Reduktionsgases von CO₂ gereinigt, erhitzt und als Recycle-Reduktionsgas zur Reduktion des eisenoxidhältigen Materials eingesetzt wird, sowie eine Anlage zur Durchführung des Verfahrens.

Ein Verfahren dieser Art ist aus der US-A - 5,185,032 bekannt. Hierbei wird zwecks möglichst weitgehender Ausnützung des Reduktionspotentials und der Wärmeenergie des Reduktionsgases das Reduktionsgas durch sämtliche Reduktionsstufen und durch in Fließrichtung des eisenoxidhältigen Materials vorgeordnete Vorwärmstufen geleitet, von der ersten Vorwärmstufe als Topgas abgezogen und anschließend gewaschen. Ein Teil des Topgases wird verdichtet, einer CO₂-Entfernung unterzogen und danach erhitzt. Das so erhitzte und von CO₂ weitgehend gereinigte Topgas wird dann als Recycle-Reduktionsgas dem Reduktionsprozeß zugeführt, wodurch eine Ausnutzung der noch im Topgas vorhandenen Reduktanten erzielt werden kann. Nachteilig ist hierbei jedoch, daß sämtliche Wirbelschicht-Reduktionsstufen und auch sämtliche Vorwärmstufen für einen Betrieb mit der Gesamtgasmenge, d.h. frisch erzeugtem Reduktionsgas und Recycle-Reduktionsgas, ausgelegt werden müssen.

Bei der Reduktion von Eisenoxiden im Wirbelschichtverfahren durch CO/CO₂-Gemische kommt es bei höheren Temperaturen (z.B. höher als 700°C) und niedrigem Reduktionspotential (d.h. bei erhöhtem CO₂- und H₂O-Gehalt im Reduktionsgas) zu gerichteten, nadeligen Eisenausscheidungen an der Oberfläche der Feinerzpartikel. Diese Eisenausscheidungen bilden die Ursache für das Phänomen "sticking" in Wirbelschichten. Bei sehr hohen Reduktionsgraden kommt es zu einem Zusammenkleben des Erzes, wodurch der Reduktionsprozeß behindert ist. Wenn jedoch die Reduktion bei sehr hohem bzw. höchstem Reduktionspotential des Reduktionsgases abläuft, erfolgt eine dichte oder poröse Eisenausscheidung, bei der kein "sticking" zu beobachten ist.

Die Erfindung bezweckt die Vermeidung dieser Nachteile und Schwierigkeiten und stellt sich die Aufgabe, ein Verfahren und eine Vorrichtung zur Durchführung des Verfahrens zu schaffen, welche eine Reduktion ohne das Auftreten von "sticking" sicherstellen, u.zw. durch eine Erhöhung des Reduktionspotentials des Reduktionsgases, wobei jedoch die zur Erzeugung des Reduktionsgases eingesetzte Menge an Kohlenstoffträgern nicht erhöht werden soll; es soll sich vielmehr eine Einsparung an Kohlenstoffträgern gegenüber dem Stand der Technik erzielen lassen.

Diese Aufgabe wird erfindungsgemäß dadurch gelöst, daß ein Teil des aus der End-Reduktionsstufe in die Vor-Reduktionsstufe strömenden Reduktionsgases abgezweigt, gewaschen, von CO₂ gereinigt sowie erhitzt wird und anschließend in die End-Reduktionsstufe rückgeführt wird.

DE-B-1 163 353 beschreibt zwei hintereinander angeordnete Wirbelschicht-Reduktionsreaktoren, die gegenläufig von eisenoxidhaltigem Material und Reduktionsgas durchströmt sind. Das aus den beiden Reaktoren abgezogene Gas wird von CO₂ und Wasser befreit und erhitzt und zum zweiten Reaktor wieder zurückgeführt, ebenso wie ein Teil des aus dem zweiten Reaktor abgezogenen Gases abgezweigt, in derselben Weise behandelt und rückgeführt wird, um die Gasgeschwindigkeit in den beiden Reaktoren auszugleichen. Ein Einschmelzvergaser ist nicht offenbart.

Beim erfindungsgemäßen Verfahren wird auf eine Ausnützung des im Reduktionsgas, das aus der End-Reduktionsstufe austritt und abgezweigt wird, noch vorhandenen Reduktionspotentials für die weiteren Reduktionsstufen bzw. eventuell vorhandene Vorerwärmungsstufen verzichtet, jedoch ergeben sich gerade hierdurch wesentliche Vorteile:

Erfindungsgemäß wird ein hohes Reduktionspotential durch eine Erhöhung der Reduktionsgasmenge sichergestellt, wobei für den stufenweise ablaufenden Reduktionsprozeß die erhöhte Reduktionsgasmenge nur für die End-Reduktionsstufe vorgesehen ist. Hierdurch wird in der End-Reduktionsstufe, in der die Temperatur am höchsten und die Gefahr des Auftretens von "sticking" am größten ist, "sticking" zuverlässig vermieden, wobei jedoch zusätzlich vermieden wird, daß alle Anlagenteile, also alle Gasleitungen, Reaktoren, Verdichter etc., eventuell vorhandene Vorwärmstufen sowie Wirbelschicht-Reduktionsstufen, für einen Betrieb mit der erhöhten Reduktionsgasmenge auszulegen sind.

Die Erfindung ermöglicht somit den gezielten Einsatz eines hohen Reduktionspotentials und bewirkt, daß die übrigen Reduktionsstufen mit der theoretisch minimalen Reduktionsgasmenge versorgt werden können und daher entsprechend kleiner und weniger aufwendig dimensioniert sein können.

Hierdurch ergibt sich nicht nur eine optimale, nämlich - bei größtmöglicher Produktionskapazität - kleinstmögliche Auslegung aller Anlagenteile, sondern auch die Möglichkeit, für den Prozeß mit der geringstmöglichen Menge an für die Erzeugung des Reduktionsgases notwendigen Kohlenstoffträgern das Auslangen zu finden, also eine Minimierung des Kohleverbrauches trotz zuverlässigen Vermeidens der Gefahr von "sticking" zu erzielen. Weiters gelingt es, Kohlen mit hohem C_{fix}-Gehalt und niedrigem Aschegehalt in der Einschmelzvergasungszone einzusetzen, obwohl diese Kohlen nur ungenügend Reduktionsgas bilden, und trotzdem eine ausgewogene Wärmebilanz zu erzielen, d.h. nur wenig Wasser in die Einschmelzvergasungszone zwecks Erhöhung der Reduktionsgasmenge einbringen zu müssen.

Da für die letzte Reduktionsstufe ein sehr hohes Reduktionspotential zur Verfügung steht, kann die Erhitzung des der End-Reduktionsstufe entnommenen, abgezweigten und in diese Stufe rückgeführten Teiles des Reduktionsgases auf eine Reduktionstemperatur im Bereich von 800 bis 900°C, beispielsweise auf eine Temperatur von etwa 850°C, vorgenommen werden.

Vorteilhaft erfolgt die Erhitzung des der End-Reduktionsstufe entnommenen und abgezweigten Reduktionsgases auf Reduktionstemperatur rekuperativ und/oder regenerativ und/oder durch eine Teilverbrennung des entnommenen Teiles des Reduktionsgases.

Vorzugsweise erfolgt die Rückführung des erhitzten Reduktionsgases durch Mischen mit dem aus der Einschmelzvergasungszone austretenden heißen Reduktionsgas nach einer Entstaubung dieses heißen Reduktionsgases.

Zur Kühlung des den Einschmelzvergaser verlassenden Reduktionsgases auf Reduktionstemperatur wird zweckmäßig ein Teil des von CO₂ gereinigten Reduktionsgases im kalten Zustand rezirkuliert, vorzugsweise dem aus der Einschmelzvergasungszone austretenden heißen Reduktionsgas vor Einleitung desselben in die End-Reduktionsstufe zugemischt.

Zwecks einfacher Regelung der Temperatur in der End-Reduktionsstufe wird vorteilhaft ein Teil des aus der Einschmelzvergasungszone austretenden heißen Reduktionsgases gewaschen und anschließend im kalten Zustand dem aus der Einschmelzvergasungszone austretenden heißen Reduktionsgas zugemischt, vorzugsweise durch Zumischen in das von CO₂ gereinigte und im kalten Zustand rückgeführte Reduktionsgas.

Eine weitere Möglichkeit zur Einstellung der Temperatur in den Wirbelschicht-Reduktionszonen liegt darin, daß der Vor-Reduktionsstufe mindestens eine Vorerwärmungsstufe für das eisenoxidhältige Material vorgeordnet ist und das aus der Vor-Reduktionsstufe austretende umgesetzte Reduktionsgas zur Vorerwärmung des eisenoxidhältigen Materials eingesetzt wird, vorzugsweise nach Abzweigung eines Teiles des umgesetzten Reduktionsgases.

Zur Anpassung der Vorwärmtemperatur des eisenoxidhältigen Materials an die Prozeßerfordernisse, d.h. Optimierung der Temperatur in den Wirbelschicht-Reduktionszonen, wird zweckmäßig das zur Vorerwärmung eingesetzte umgesetzte Reduktionsgas einer Teilverbrennung unterworfen.

Eine Anlage zur Durchführung des Verfahrens mit mindestens zwei hintereinander in Serie geschalteten Wirbelschichtreaktoren, wobei das eisenoxidhältige Material von Wirbelschichtreaktor zu Wirbelschichtreaktor über Förderleitungen in einer Richtung und das Reduktionsgas von Wirbelschichtreaktor zu Wirbelschichtreaktor über Reduktionsgas-Verbindungsleitungen in die entgegengesetzte Richtung geführt ist, und mit einem Einschmelzvergaser, in den eine das Reduktionsprodukt aus dem in Fließrichtung des eisenoxidhältigen Materials letztangeordneten Wirbelschichtreaktor führende Förderleitung mündet und der Zuleitungen für sauerstoffhältige Gase und Kohlenstoffträger, sowie einen Abstich für Roheisen bzw. Stahlvormaterial und Schlacke sowie eine in den in Fließrichtung des eisenoxidhältigen Materials letztangeordneten Wirbelschichtreaktor mündende Reduktionsgas-Zuleitung für im Einschmelzvergaser gebildetes Reduktionsgas aufweist, ist dadurch gekennzeichnet, daß von der den in Fließrichtung des eisenoxidhältigen Materials letztangeordneten Wirbelschichtreaktor mit dem vorgeordneten Wirbelschichtreaktor verbindenden Reduktionsgas-Verbindungsleitung eine Zweigleitung abzweigt, die über einen Wäscher, eine CO₂-Eliminierungsanlage und einen Gaserhitzer in die Reduktionsgas-Zuleitung mündet.

Eine bevorzugte Ausführungsform ist dadurch gekennzeichnet, daß der Gaserhitzer mit einer Reduktionsgas-Bypassleitung überbrückbar ist.

Hierbei ist zweckmäßig in der Reduktionsgas-Zuleitung eine Reduktionsgas-Enstaubungseinrichtung vorgesehen und mündet die Zweigleitung in die Reduktionsgas-Zuleitung zwischen der Reduktionsgas-Entstaubungseinrichtung und dem Wirbelschichtreaktor.

Eine weitere bevorzugte Ausführungsform ist dadurch gekennzeichnet, daß von der Reduktionsgas-Zuleitung eine Reduktionsgas-Rückführleitung über einen Wäscher und einen Verdichter wieder in die Reduktionsgas-Zuleitung, jedoch in Gasströmungsrichtung vor der Abzweigung der Gasrückführleitung, mündet, insbesondere vor Anordnung einer in der Reduktionsgas-Zuleitung vorgesehenen Enstaubungseinrichtung.

Vorteilhaft ist in Fließrichtung des eisenoxidhältigen Materials dem ersten Reduktions-Wirbelschichtreaktor mindestens ein Vorwärm-Wirbelschichtreaktor vorgeschaltet, in den eine Reduktionsgas-Ableitung ausgehend von dem in Fließrichtung des eisenoxidhältigen Materials ersten Reduktions-Wirbelschichtreaktor mündet, wobei zweckmäßig weiters eine ein sauerstoffhältiges Gas oder Sauerstoff zuführende Leitung in den Vorwärm-Wirbelschichtreaktor mündet.

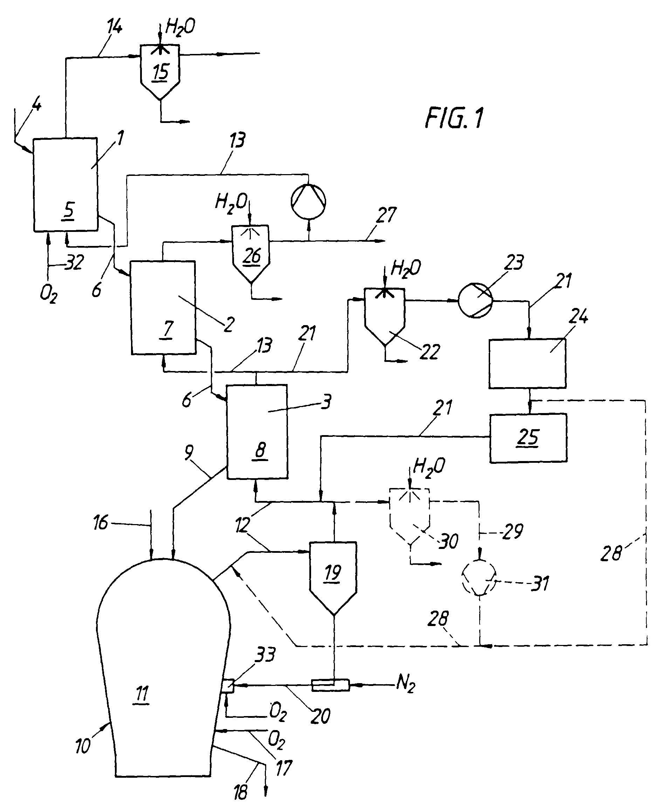

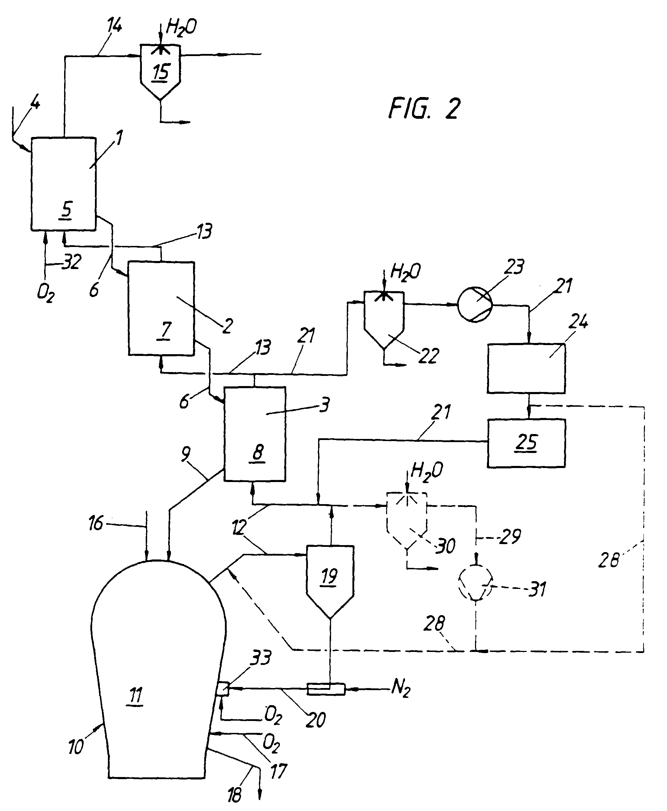

Die Erfindung ist nachfolgend anhand zweier in der Zeichnung dargestellter Ausführungsbeispiele näher erläutert, wobei die Fig. 1 und 2 jeweils eine vorteilhafte Variante des erfindungsgemäßen Verfahrens im Blockschema veranschaulichen.

Die erfindungsgemäße Anlage weist drei in Serie hintereinander geschaltete Wirbelschichtreaktoren 1 bis 3 auf, wobei eisenoxidhältiges Material, wie Feinerz, über eine Erzzuleitung 4 dem ersten Wirbelschichtreaktor 1, in dem in einer Vorwärmstufe 5 eine Vorerwärmung des Feinerzes und eventuell eine Vorreduktion stattfindet, zugeleitet und anschließend von Wirbelschichtreaktor 1 zu Wirbelschichtreaktor 2, 3 über Förderleitungen 6 geleitet wird. In dem Wirbelschichtreaktor 2 erfolgt in einer Vor-Reduktionsstufe 7 eine Vorreduktion und im Wirbelschichtreaktor 3 in einer End-Reduktionsstufe 8 eine End-Reduktion des Feinerzes zu Eisenschwamm.

Das fertig reduzierte Material, also der Eisenschwamm, wird über eine Förderleitung 9 in einen Einschmelzvergaser 10 geleitet. Im Einschmelzvergaser 10 wird in einer Einschmelzvergasungszone 11 aus Kohle und sauerstoffhältigem Gas ein CO- und H₂-hältiges Reduktionsgas erzeugt, das über die Reduktionsgas-Zuleitung 12 in den in Fließrichtung des Feinerzes letztangeordneten Wirbelschichtreaktor 3 eingeleitet wird. Das Reduktionsgas wird dann im Gegenstrom zum Erzdurchfluß von Wirbelschichtreaktor 3 zu Wirbelschichtreaktor 2 bis 1 geführt, u.zw. über die Verbindungsleitungen 13, aus dem Wirbelschichtreaktor 1 als Topgas über eine Topgas-Ableitung 14 abgeleitet und anschließend in einem Naßwäscher 15 gekühlt und gewaschen.

Der Einschmelzvergaser 10 weist eine Zuführung 16 für feste Kohlenstoffträger, eine Zuführung 17 für sauerstoffhältige Gase sowie gegebenenfalls Zuführungen für bei Raumtemperatur flüssige oder gasförmige Kohlenstoffträger, wie Kohlenwasserstoffe, sowie für gebrannte Zuschläge auf. In dem Einschmelzvergaser 10 sammelt sich unterhalb der Einschmelzvergasungszone 11 schmelzflüssiges Roheisen bzw. schmelzflüssiges Stahlvormaterial und schmelzflüssige Schlacke, die über einen Abstich 18 abgestochen werden.

In der Reduktionsgas-Zuleitung 12, die vom Einschmelzvergaser 10 ausgeht und in den Wirbelschichtreaktor 3 mündet, ist eine Entstaubungseinrichtung 19, wie ein Heißgaszyklon, vorgesehen, wobei die in diesem Zyklon abgeschiedenen Staubteile dem Einschmelzvergaser 10 über die Rückleitung 20 mit Stickstoff als Fördermittel und über einen Brenner 33 unter Einblasen von Sauerstoff zugeführt werden.

Von der den Wirbelschichtreaktor 3 mit dem Wirbelschichtreaktor 2 verbindenden Reduktionsgas-Verbindungsleitung 13 zweigt eine Zweigleitung 21 ab, über die ein Teil des im Wirbelschichtreaktor 3 umgesetzten Reduktionsgases abgeleitet wird. Diese Zweigleitung 21 mündet in einen Wäscher 22 und führt vom Wäscher über einen Verdichter 23 zu einer CO₂-Eliminierungsanlage 24. Diese kann z.B. als Druckwechsel-Adsorptionsanlage oder als CO₂-Wäscher ausgebildet sein. Von der CO₂-Eliminierungsanlage 24 führt die Zweigleitung 21 zu einem Gaserhitzer 25 und mündet schließlich in die Reduktionsgas-Zuleitung 12, u.zw. vorzugsweise zwischen dem Heißgaszyklon 19 und dem Wirbelschichtreaktor 3.

Hierdurch gelingt es, einen Teil des im Wirbelschichtreaktor 3 umgesetzten Reduktionsgases weitgehend vom CO₂ zu befreien, so daß es wiederum - nach einer Erhitzung auf Reduktionsgastemperatur, vorzugsweise auf eine Temperatur zwischen 800°C und 900°C - als ein hohes Reduktionspotential aufweisendes Reduktionsgas zur Verfügung steht. Hierdurch ist die End-Reduktionsstufe X mit einer besonders großen Menge an Reduktionsgas versorgt, so daß trotz der relativ hohen Temperatur in der End-Reduktionsstufe 8 die Gefahr des Auftretens von "sticking" infolge der großen Menge an zur Verfügung stehenden Reduktanten nicht gegeben ist.

Die Erhitzung des über die Zweigleitung 21 entnommenen Teiles des Reduktionsgases erfolgt regenerativ, rekuperativ oder durch eine Teilverbrennung dieses Gases, wobei diese Erhitzungsverfahren einzeln oder in Kombination zu zweien oder zu dritt angewendet werden können.

Der Wirbelschichtreaktor 2, in dem die Vorreduktion des Feinerzes stattfindet, wird mit einer viel geringeren Menge an Reduktionsgas, das zudem ein geringeres Reduktionspotential aufweist, versorgt, was jedoch für die Vor-Reduktion durchaus ausreichend ist. Da hier der erreichte Reduktionsgrad des zu reduzierenden Materials niedriger ist als in der End-Reduktionsstufe 8, tritt hier kein "sticking" auf. Die Bemessung dieses Wirbelschichtreaktors 2 und dessen Gaszu- und -abführungsleitungen 13 etc. erfolgt daher entsprechend der geringeren Reduktionsgasmenge, die durch diesen Wirbelschichtreaktor 2 durchgeleitet wird. Das aus diesem Wirbelschichtreaktor 2 austretende umgesetzte Reduktionsgas wird über die Leitung 13 einem Wäscher 26 zugeführt. Ein Teil des gewaschenen umgesetzten Reduktionsgases wird über eine Exportgas-Ableitung 27 abgezogen; ein anderer Teil der Vorerwärmungsstufe 5, d.h. dem Wirbelschichtreaktor 1, über die Leitung 13 zugeführt.

Vorzugsweise ist der Gaserhitzer 25 mittels einer Bypass-Leitung 28 für einen Teil des rückgeführten Reduktionsgases überbrückbar, wobei die Bypass-Leitung 28 in die Reduktionsgas-Zuführungsleitung 12, die den Einschmelzvergaser 10 mit dem Wirbelschichtreaktor 3 verbindet, mündet. Über diese Bypass-Leitung 28 kann somit kaltes Recycle-Reduktionsgas mit dem aus dem Einschmelzvergaser 10 austretenden heißen Reduktionsgas gemischt werden, wobei durch eine Mengensteuerung bzw. Mengenregelung die gewünschte Reduktionsgastemperatur in einfacher Weise eingestellt werden kann.

Eine weitere Möglichkeit zur Einstellung der Reduktionsgastemperatur ergibt sich durch die vorzugsweise vorgesehene Gasrückführleitung 29, die von der Reduktionsgas-Zuleitung 12 ausgeht und einen Teil des Reduktionsgases über einen Wäscher 30 und einen Verdichter 31 in diese Reduktionsgas-Zuleitung 12 wiederum zurückführt, u.zw. vor der Anordnung des Heißgaszyklons 19.

Gemäß der in Fig. 1 dargestellten Verfahrensvariante bzw. Anlage wird nach jedem Wirbelschichtreaktor 1 bis 3 eine Teilmenge des umgesetzten Reduktionsgases abgezweigt, wodurch jedem der Wirbelschichtreaktoren 1 bis 3 jeweils nur die Gasmenge zugeführt wird, die für die einwandfreie Funktion des jeweiligen Wirbelschichtreaktors erforderlich ist.

Gemäß der in Fig. 2 dargestellten Verfahrensvariante wird das gesamte, aus dem Wirbelschichtreaktor 2 austretende umgesetzte Reduktionsgas in der Vorerwärmungsstufe 5 eingesetzt. Hierbei wird die gesamte fühlbare Wärme des aus dem Wirbelschichtreaktor 2 austretenden umgesetzten Reduktionsgases für die Vorerwärmung des Feinerzes genutzt.

Zur Einstellung der Vorerwärmungstemperatur des Feinerzes kann der Vorerwärmungsstufe 5, also dem Wirbelschichtreaktor 1, ein sauerstoffhältiges Gas, wie Luft oder Sauerstoff, über eine Leitung 32 zugeführt werden, wodurch eine Teilverbrennung des der Vorerwärmungsstufe 5 zugeführten umgesetzten Reduktionsgases stattfindet. Durch Steuerung der Teilverbrennung läßt sich die Temperatur des Feinerzes bei der Vorerwärmung derart einstellen, daß die Temperaturen in den nachfolgenden Reduktionsstufen 7, 8 optimiert sind.

Die Erfindung beschränkt sich nicht auf die in der Zeichnung dargestellten Ausführungsbeispiele, sondern kann in verschiedener Hinsicht modifiziert werden. Beispielsweise ist es möglich, die Anzahl der Wirbelschichtreaktoren je nach den Erfordernissen zu wählen.

### Beispiel:

In einer der Fig. 1 der Zeichnung entsprechenden Anlage werden zur Erzeugung von 40 t Roheisen/h dem Einschmelzvergaser 10 31,4 t Kohle/h mit der in Tabelle I angegebenen chemischen Zusammensetzung chargiert und mit 31.240 Nm³ O₂/h vergast.

**Tabelle I**

| Kohle (trocken) | |
|---|---|
| C | 78,9 % |
| H | 3,8 % |
| N | 1,0 % |
| O | 2,0 % |
| Asche | 8,7 % |
| C_{fix} | 72,0 % |

In die Anlage wird Erz in einer Menge von 58,6 t/h mit der in Tabelle II angegebenen Erzanalyse und werden Zuschläge in einer Menge von 8,6 t/h gemäß Tabelle III chargiert. Das in der Anlage erzeugte Roheisen weist die in Tabelle IV angegebene chemische Zusammensetzung auf.

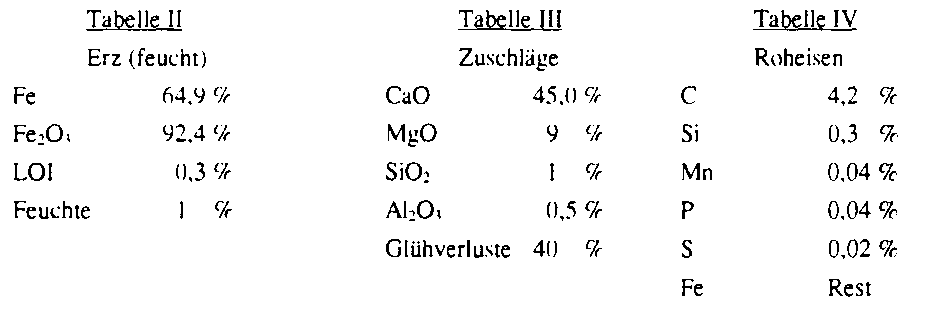

Im Einschmelzvergaser 10 wird Reduktionsgas in einer Menge von 63.440 Nm³/h und einer Temperatur von 870°C hergestellt. Es weist die in Tabelle V angegebene chemische Zusammensetzung auf. Dieses Reduktionsgas wird mit Recycle-Reduktionsgas, das über die Zweigleitung 21 zugeführt wird, u.zw. in einer Menge von etwa 68.000 Nm³/h und einer Temperatur nach der Aufheizung im Gaserhitzer 25 von 870°C gemischt, wodurch ein Reduktionsgas der End-Reduktionsstufe 8 in einer Menge von 116.760 Nm³/h und einer Temperatur von 870°C zur Verfügung gestellt werden kann. Dieses Reduktionsgas weist die in Tabelle VI angegebene chemische Zusammensetzung auf.

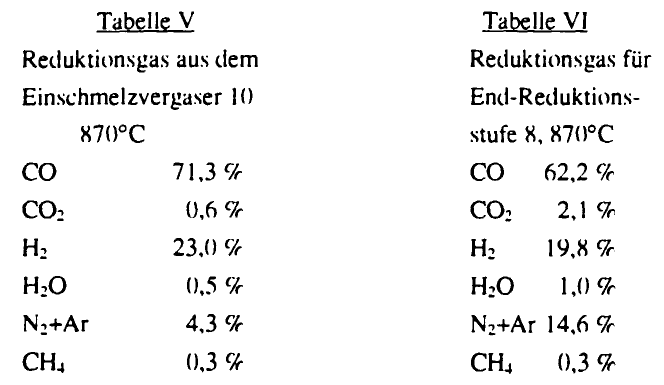

Dem aus der End-Reduktionsstufe 8 entweichenden, teilweise umgesetzten Reduktionsgas wird ein Teil, u.zw. in einer Menge von etwa 68.000 Nm³/h mit der in Tabelle VII wiedergegebenen chemischen Zusammensetzung entnommen und über die Zweigleitung 21 einem CO₂-Wäscher 24 zugeführt. Das über die Leitungen 27 und 14 abgeleitete Exportgas fällt in einer Menge 47.720 Nm³/h an. Seine chemische Zusammensetzung ist in Tabelle VIII wiedergegeben.

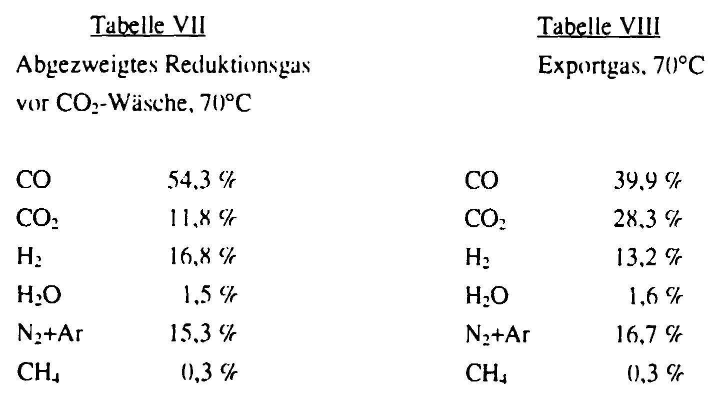

## Patentansprüche

1. Verfahren zur Herstellung von flüssigem Roheisen oder flüssigen Stahlvorprodukten, aus teilchenförmigem eisenoxidhältigem Material im Wirbelschichtverfahren, wobei das eisenoxidhältige Material mit Hilfe eines Reduktionsgases in mindestens einer Vor-Reduktionsstufe (7) vorreduziert und anschließend in einer End-Reduktionsstufe (8) zu Eisenschwamm reduziert wird, der Eisenschwamm in einer Einschmelzvergasungszone (11) unter Zufuhr von Kohlenstoffträgern und sauerstoffhältigem Gas erschmolzen und ein CO- und H₂-hältiges Reduktionsgas erzeugt wird, welches in die End-Reduktionsstufe (8) eingeleitet, dort umgesetzt, abgezogen, anschließend in mindestens eine Vor-Reduktionsstufe (7) eingeleitet, dort umgesetzt, abgezogen, einer Wäsche unterworfen und anschließend als Exportgas abgeleitet wird und wobei zumindest ein Teil des umgesetzten Reduktionsgases von CO₂ gereinigt, erhitzt und als Recycle-Reduktionsgas zur Reduktion des eisenoxidhältigen Materials eingesetzt wird, dadurch gekennzeichnet, daß ein Teil des aus der End-Reduktionsstufe (8) in die Vor-Reduktionsstufe (7) strömenden Reduktionsgases abgezweigt, gewaschen, von CO₂ gereinigt sowie erhitzt wird und anschließend in die End-Reduktionsstufe (8) rückgeführt wird.

2. Verfahren nach Anspruch 1, dadurch gekennzeichnet, daß die Erhitzung des der End-Reduktionsstufe (8) entnommenen und abgezweigten Reduktionsgases auf Reduktionstemperatur, vorzugsweise auf eine Temperatur im Bereich zwischen 800 und 900°C vorgenommen wird.

3. Verfahren nach Anspruch 1 oder 2, dadurch gekennzeichnet, daß die Erhitzung des der End-Reduktionsstufe (8) entnommenen und abgezweigten Reduktionsgases auf Reduktionstemperatur rekuperativ und/oder regenerativ und/oder durch eine Teilverbrennung des entnommenen Teiles des Reduktionsgases erfolgt.

4. Verfahren nach einem oder mehreren der Ansprüche 1 bis 3, dadurch gekennzeichnet, daß die Rückführung des erhitzten Reduktionsgases durch Mischen mit dem aus der Einschmelzvergasungszone (11) austretenden heilten Reduktionsgas nach einer Entstaubung dieses heißen Reduktionsgases erfolgt.

5. Verfahren nach einem oder mehreren der Ansprüche 1 bis 4, dadurch gekennzeichnet, daß ein Teil des von CO₂ gereinigten Reduktionsgases im kalten Zustand rezirkuliert wird, vorzugsweise dem aus der Einschmelzvergasungszone (11) austretenden heißen Reduktionsgas vor Einleitung desselben in die End-Reduktionsstufe (8) zugemischt wird.

6. Verfahren nach einem oder mehreren der Ansprüche 1 bis 5, dadurch gekennzeichnet, daß ein Teil des aus der Einschmelzvergasungszone (11) austretenden heißen Reduktionsgases gewaschen wird und anschließend im kalten Zustand dem aus der Einschmelzvergasungszone (11) austretenden heißen Reduktionsgas zugemischt wird, vorzugsweise durch Zumischen in das von CO₂ gereinigte und im kalten Zustand rückgeführte Reduktionsgas.

7. Verfahren nach einem oder mehreren der Ansprüche 1 bis 6, dadurch gekennzeichnet, daß der Vor-Reduktionsstufe (7) mindestens eine Vorerwärmungsstufe (5) für das eisenoxidhältige Material vorgeordnet ist und das aus der Vor-Reduktionsstufe (7) austretende umgesetzte Reduktionsgas zur Vorerwärmung des eisenoxidhältigen Materials eingesetzt wird, vorzugsweise nach Abzweigung eines Teiles des umgesetzten Reduktionsgases.

8. Verfahren nach Anspruch 7, dadurch gekennzeichnet, daß das zur Vorerwärmung eingesetzte umgesetzte Reduktionsgas einer Teilverbrennung unterworfen wird.

9. Anlage zur Durchführung des Verfahrens nach einem oder mehreren der Ansprüche 1 bis 8, mit mindestens zwei hintereinander in Serie geschalteten Wirbelschichtreaktoren (1, 2, 3), wobei das eisenoxidhältige Material von Wirbelschichtreaktor (1) zu Wirbelschichtreaktor (2, 3) über Förderleitungen (6) in einer Richtung und das Reduktionsgas von Wirbelschichtreaktor (3) zu Wirbelschichtreaktor (2, 1) über Reduktionsgas-Verbindungsleitungen (13) in die entgegengesetzte Richtung geführt ist, und mit einem Einschmelzvergaser (10), in den eine das Reduktionsprodukt aus dem in Fließrichtung des eisentoxidhältigen Materials letztangeordneten Wirbelschichtreaktor (3) führende Förderleitung (9) mündet und der Zuleitungen (17, 16) für sauerstoffhältige Gase und Kohlenstoffträger, sowie einen Abstich (18) für Roheisen bzw. Stahlvormaterial und Schlacke sowie eine in den in Fließrichtung des eisenoxidhältigen Materials letztangeordneten Wirbelschichtreaktor (3) mündende Reduktionsgas-Zuleitung (12) für im Einschmelzvergaser (10) gebildetes Reduktionsgas aufweist, dadurch gekennzeichnet, daß von der den in Fließrichtung des eisenoxidhältigen Materials letztangeordneten Wirbelschichtreaktor (3) mit dem vorgeordneten Wirbelschichtreaktor (2) verbindenden Reduktionsgas-Verbindungsleitung (13) eine Zweigleitung (21) abzweigt, die über einen Wäscher (22), eine CO₂-Eliminierungsanlage (24) und einen Gaserhitzer (25) in die Reduktionsgas-Zuleitung (12) mündet.

10. Anlage nach Anspruch 9, dadurch gekennzeichnet, daß der Gaserhitzer (25) mit einer Reduktionsgas-Bypassleitung (28) überbrückbar ist.

11. Anlage nach Anspruch 10, dadurch gekennzeichnet, daß in der Reduktionsgas-Zuleitung (12) eine Reduktionsgas-Enstaubungseinrichtung (19) vorgesehen ist und die Zweigleitung (21) in die Reduktionsgas-Zuleitung (12) zwischen der Reduktionsgas-Entstaubungseinrichtung (19) und dem Wirbelschichtreaktor (3) mündet.

12. Anlage nach einem oder mehreren der Ansprüche 9 bis 11, dadurch gekennzeichnet, daß von der Reduktionsgas-Zuleitung (12) eine Reduktionsgas-Rückführleitung (29) über einen Wäscher (30) und einen Verdichter (31) wieder in die Reduktionsgas-Zuleitung (12), jedoch in Gasströmungsrichtung vor der Abzweigung der Gasrückführleitung (29), mündet, insbesondere vor Anordnung einer in der Reduktionsgas-Zuleitung (12) vorgesehenen Enstaubungseinrichtung (19).

13. Anlage nach einem oder mehreren der Ansprüche 9 bis 12, dadurch gekennzeichnet, daß in Fließrichtung des eisenoxidhältigen Materials dem ersten Reduktions-Wirbelschichtreaktor (7) mindestens ein Vorwärm-Wirbelschichtreaktor (1) vorgeschaltet ist, in den eine Reduktionsgas-Ableitung (13) ausgehend von dem in Fließrichtung des eisenoxidhältigen Materials ersten Reduktions-Wirbelschichtreaktor (7) mündet.

14. Anlage nach Anspruch 13, dadurch gekennzeichnet, daß weiters eine ein sauerstoffhältiges Gas oder Sauerstoff zuführende Leitung (32) in den Vorwärm-Wirbelschichtreaktor (1) mündet.

## Claims

1. A process for the production of molten pig iron or liquid steel pre-products from particulate iron-oxide-containing material in the fluidized bed method, wherein the iron-oxide-containing material is prereduced in at least one prereduction stage (7) by aid of a reducing gas and subsequently is reduced to sponge iron in a final reduction stage (8), the sponge iron is melted in a meltdown-gasifying zone (11) under supply of carbon carriers and oxygen-containing gas and a CO- and H₂-containing reducing gas is produced, which is introduced into the final reduction stage (8), is reacted there, is drawn off, subsequently is introduced into the prereduction stage (7), is reacted there, is drawn off, subjected to scrubbing and subsequently is carried off as an export gas, and wherein at least a portion of the reacted reducing gas is purified from CO₂, is heated and is used as a recycle reducing gas for the reduction of the iron-oxide-containing material, characterized in that a portion of the reducing gas flowing from the final reduction stage (8) into the prereduction stage (7) is branched off, scrubbed, purified from CO₂ and heated and subsequently is recycled to the final reduction stage (8).

2. A process according to claim 1, characterized in that heating of the reducing gas removed from the final reduction stage (8) and branched off is effected to reduction temperature, preferably to a temperature ranging betwen 800 and 900°C.

3. A process according to claim 1 or 2, characterized in that heating to reduction temperature of the reducing gas removed from the final reduction stage (8) and branched off is effected by way of recuperation and/or regeneration and/or partial combustion of the removed portion of the reducing gas.

4. A process according to one or several of claims 1 to 3, characterized in that recycling of the heated reducing gas is effected by mixture with the hot reducing gas leaving the meltdown-gasifying zone (11) after dedusting of said hot reducing gas.

5. A process according to one or several of claims 1 to 4, characterized in that a portion of the reducing gas purified from CO₂ is recirculated in the cold state, preferably is admixed to the hot reducing gas leaving the meltdown-gasifying zone (11) prior to the introduction thereof into the final reduction stage (8).

6. A process according to one or several of claims 1 to 5, characterized in that a portion of the hot reducing gas leaving the meltdown-gasifying zone (11) is scrubbed and subsequently is admixed in the cold state to the hot reducing gas leaving the meltdown-gasifying zone (11), preferably by admixture to the reducing gas purified from CO₂ and recycled in the cold state.

7. A process according to one or several of claims 1 to 6, characterized in that the prereduction stage (7) is preceded by at least one preheating stage (5) for the iron-oxide-containing material and the reacted reducing gas leaving the prereduction stage (7) is used for preheating the iron-oxide-containing material, preferably after branching off of a portion of the reacted reducing gas.

8. A process according to claim 7, characterized in that the reacted reducing gas used for preheating is subjected to a partial combustion.

9. A plant for carrying out the process according to one or several of claims 1 to 8, comprising at least two fluidized bed reactors (1, 2, 3) consecutively arranged in series, wherein the iron-oxide-containing material is conducted in one direction from one fluidized bed reactor (1) to another fluidized bed reactor (2, 3) via conveying ducts (6) and the reducing gas is conducted in the opposite direction from one fluidized bed reactor (3) to another fluidized bed reactor (2, 1) via reducing gas connection ducts (13), and comprising a melter gasifier (10) into which runs a conveying duct (9) conducting the reduction product from the fluidized bed reactor (3) arranged last in the flow direction of the iron-oxide-containing material and which includes feed ducts (17, 16) for oxygen-containing gases and carbon carriers as well as a tap means (18) for pig iron and/or steel pre-material and slag as well as a reducing gas feed duct (12) for reducing gas formed in the melter gasifier (10), which opens into the fluidized bed reactor (3) arranged last in the flow direction of the iron-oxide-containing material, characterized in that a branch duct (21) branches off the reducing gas connection duct (13) connecting the fluidized bed reactor (3) arranged last in the flow direction of the iron-oxide-containing material with the preceding fluidized bed reactor (2), which branch duct runs into the reducing gas feed duct (12) via a scrubber (22), a CO₂-elimination means (24) and a gas heater (25).

10. A plant according to claim 9, characterized in that the gas heater (25) is capable of being bridged by a reducing gas bypass duct (28).

11. A plant according to claim 10, characterized in that a reducing gas dedusting means (19) is provided in the reducing gas feed duct (12) and the branch duct (21) runs into the reducing gas feed duct (12) between the reducing gas dedusting means (19) and the fluidized bed reactor (3).

12. A plant according to one or several of claims 9 to 11, characterized in that from the reducing gas feed duct (12) a reducing gas recycling duct (29), via a scrubber (30) and a compressor (31), runs back into the reducing gas feed duct (12), yet upstream of the branch-off of the gas recycling duct (29), viewed in the gas flow direction, in particular upstream of a dedusting means (19) arranged in the reducing gas feed duct (12).

13. A plant according to one or several of claims 9 to 12, characterized in that, viewed in the flow direction of the iron-oxide-containing material, the first fluidized bed reduction reactor (7) is preceded by at least one fluidized bed preheating reactor (1), into which runs a reducing gas discharge duct (13) departing from the first fluidized bed reduction reactor (7) - viewed in the flow direction of the iron-oxide-containing material.

14. A plant according to claim 13, characterized in that, furthermore, a duct (32) feeding an oxygen-containing gas or oxygen runs into the preheating fluidized bed reactor (1).

## Revendications

1. Procédé de fabrication de fonte brute liquide ou d'acier brut liquide, à partir d'un matériau sous forme de particules contenant de l'oxyde de fer dans le procédé à lit fluidisé, dans lequel le matériau contenant de l'oxyde de fer est réduit au préalable à l'aide d'un gaz de réduction dans au moins un étage de réduction préalable (7) et est ensuite réduit dans un étage de réduction final (8) en éponge de fer, dans lequel l'éponge de fer est élaborée dans une zone de gazéification à fusion (11) avec amenée de porteurs de carbone et de gaz contenant de l'oxygène et un gaz de réduction contenant du CO et de l'H₂ est produit, lequel gaz de réduction est introduit dans l'étage de réduction final (8), est transformé là, est extrait, est ensuite introduit dans au moins un étage de réduction préalable (7), est transformé là, est extrait, est soumis à un lavage et est ensuite évacué comme gaz exporté et dans lequel au moins une partie du gaz de réduction transformé est débarrassée du CO₂, est chauffée et est utilisée comme gaz de réduction recyclé pour la réduction du matériau contenant de l'oxyde de fer, caractérisé en ce qu'une partie du gaz de réduction s'écoulant de l'étage de réduction final (8) dans l'étage de réduction préalable (7) est détournée, lavée, débarrassée du CO₂ et chauffée puis renvoyée dans l'étage de réduction final (8).

2. Procédé selon la revendication 1, caractérisé en ce que le chauffage du gaz de réduction prélevé dans l'étage de réduction final (8) et détourné s'effectue à la température de réduction, de préférence à une température comprise entre 800° et 900 °C.

3. Procédé selon la revendication 1 ou 2, caractérisé en ce que le chauffage du gaz de réduction prélevé dans l'étage de réduction final (8) et détourné s'effectue à la température de réduction avec une récupération et/ou avec une régénération et/ou avec une combustion partielle de la partie prélevée du gaz de réduction.

4. Procédé selon une ou plusieurs des revendications 1 à 3, caractérisé en ce que le renvoi du gaz de réduction chauffé s'effectue par un mélange avec le gaz de réduction chaud sortant de la zone de gazéification à fusion (11) après un dépoussiérage de ce gaz de réduction chaud.

5. Procédé selon une ou plusieurs des revendications 1 à 4, caractérisé en ce qu'une partie du gaz de réduction débarrassé du CO₂ est remise en circulation à l'état froid et est mélangée de préférence au gaz de réduction chaud sortant de la zone de gazéification à fusion (11) avant l'introduction de celui-ci dans l'étage de réduction final (8).

6. Procédé selon une ou plusieurs des revendications 1 à 5, caractérisé en ce qu'une partie du gaz de réduction chaud sortant de la zone de gazéification à fusion (11) est lavée et est ensuite mélangée à l'état froid au gaz de réduction chaud sortant de la zone de gazéification à fusion (11), de préférence par un mélange dans le gaz de réduction débarrassé du CO₂ et renvoyé à l'état froid.

7. Procédé selon une ou plusieurs des revendications 1 à 6, caractérisé en ce qu'au moins un étage de préchauffage (5) pour le matériau contenant de l'oxyde de fer est agencé en amont de l'étage de réduction préalable (7) et en ce que le gaz de réduction transformé sortant de l'étage de réduction préalable (7) est utilisé pour le préchauffage du matériau contenant de l'oxyde de fer, de préférence après le détournement d'une partie du gaz de réduction transformé.

8. Procédé selon la revendication 7, caractérisé en ce que le gaz de réduction transformé utilisé pour le préchauffage est soumis à une combustion partielle.

9. Installation pour la mise en oeuvre du procédé selon une ou plusieurs des revendications 1 à 8, comportant au moins deux réacteurs à lit fluidisé (1, 2, 3) placés en série les uns derrière les autres, dans laquelle le matériau contenant de l'oxyde de fer est conduit de réacteur à lit fluidisé (1) en réacteur à lit fluidisé (2, 3) par l'intermédiaire de conduites de transport (6) dans un sens et le gaz de réduction est conduit de réacteur à lit fluidisé (3) en réacteur à lit fluidisé (2, 1) par l'intermédiaire de conduites de raccordement de gaz de réduction (13) dans le sens inverse, et comportant un gazéificateur à fusion (10) dans lequel débouche une conduite de transport (9) conduisant le produit de réduction hors du réacteur à lit fluidisé (3) agencé en dernier dans le sens d'écoulement du matériau contenant de l'oxyde de fer et qui comporte des conduites d'amenée (17, 16) pour des gaz contenant de l'oxygène et pour des porteurs de carbone, ainsi qu'une percée (18) pour de la fonte brute ou pour de l'acier brut et pour des scories, ainsi qu'une conduite d'amenée de gaz de réduction (12) qui débouche dans le réacteur à lit fluidisé (3) agencé en dernier dans le sens d'écoulement du matériau contenant de l'oxyde de fer et qui est destinée à un gaz de réduction formé dans le gazéificateur à fusion (10), caractérisée en ce qu'une conduite de branchement (21) se sépare de la conduite de raccordement de gaz de réduction (13) raccordant le réacteur à lit fluidisé (3) agencé en dernier dans le sens d'écoulement du matériau contenant de l'oxyde de fer et le réacteur à lit fluidisé (2) agencé en amont et en ce qu'elle débouche par l'intermédiaire d'un dispositif de lavage (22), d'une installation d'élimination de CO₂ (24) et d'un dispositif de chauffage de gaz (25) dans la conduite d'amenée de gaz de réduction (12).

10. Installation selon la revendication 9, caractérisée en ce que le dispositif de chauffage de gaz (25) peut être ponté avec une conduite de dérivation de gaz de réduction (28).

11. Installation selon la revendication 10, caractérisée en ce qu'il est prévu dans la conduite d'amenée de gaz de réduction (12) un dispositif de dépoussiérage de gaz de réduction (19) et en ce que la conduite de branchement (21) débouche dans la conduite d'amenée de gaz de réduction (12) entre le dispositif de dépoussiérage de gaz de réduction (19) et le réacteur à lit fluidisé (3).

12. Installation selon une ou plusieurs des revendications 9 à 11, caractérisée en ce que, à partir de la conduite d'amenée de gaz de réduction (12), une conduite de retour de gaz de réduction (29) débouche de nouveau, par l'intermédiaire d'un dispositif de lavage (30) et d'un compresseur (31), dans la conduite d'amenée de gaz de réduction (12) mais avant, dans le sens d'écoulement du gaz, le branchement de la conduite de retour de gaz de réduction (29), notamment avant l'agencement d'un dispositif de dépoussiérage (19) prévu dans la conduite d'amenée de gaz de réduction (12).

13. Installation selon une ou plusieurs des revendications 9 à 12, caractérisée en ce qu'il est placé en amont, dans le sens d'écoulement du matériau contenant de l'oxyde de fer, du premier réacteur à lit fluidisé de réduction (7) au moins un réacteur à lit fluidisé de préchauffage (1) dans lequel débouche une conduite de gaz de réduction (13) partant du premier réacteur à lit fluidisé de réduction (7) dans le sens d'écoulement du matériau contenant de l'oxyde de fer.

14. Installation selon la revendication 13, caractérisée en ce que, d'autre part, une conduite (32) amenant un gaz contenant de l'oxygène ou de l'oxygène débouche dans le réacteur à lit fluidisé de préchauffage (1) .
